# EUROPEAN PATENT SPECIFICATION

(11) **EP 0 465 897 B1**
(45) Date of publication and mention of the grant of the patent: **10.09.1997**
(21) Application number: 91110289.5
(22) Date of filing: 21.06.1991
(51) Int. Cl.: G03B 19/04

(54) **A lens-fitted main body of a camera**
Mit einem Objektiv bestückter Hauptkörper einer Kamera
Corps principal d'une caméra muni d'un objectif

(30) Priority: 09.07.1990 JP 180994/90; 07.08.1990 JP 83580/90 U
(43) Date of publication of application: 15.01.1992
(73) Proprietor: FUJI PHOTO FILM CO., LTD., Kanagawa (JP)
(72) Inventor: Nakai, Norihiko, c/o Fuji Photo Film Co., Ltd., Minami Ashigara-shi, Kanagawa-ken (JP); Mochizuki, Tatsuya, c/o Fuji Photo Film Co., Ltd., Minami Ashigara-shi, Kanagawa-ken (JP); Sugimoto, Takashi, c/o Fuji Photo Film Co., Ltd., Minami Ashigara-shi, Kanagawa-ken (JP); Yamashina, Yasuhiro, c/o Fuji Photo Film Co., Ltd., Minami Ashigara-shi, Kanagawa-ken (JP); Ogura, Toshiyuki, c/o Fuji Photo Film Co., Ltd., Minami Ashigara-shi, Kanagawa-ken (JP)
(74) Representative: Grünecker, Kinkeldey, Stockmair & Schwanhäusser Anwaltssozietät

(56) References cited:
- EP-A- 0 332 832
- DE-A- 3 905 310
- GB-A- 1 494 866
- US-A- 3 896 467

## Description

The present invention relates to a lens-fitted photographic film unit of the type as described in the preamble of claim 1.

A lens-fitted photographic film unit is sold at a low cost, comparable to a conventional film, and is available wherever ordinary photographic films are sold. It is easy to get a new lens-fitted photographic film unit and to take photographs without a camera, if one who takes no camera along but wants to take photographs. The present applicant has already filed applications such as Japanese Patent Laid-open Application No. 64-544 or DE-A-3 905 310 disclosing a lens-fitted photographic film unit of the above-defined type. Such a film unit as illustrated in Fig. 8 has a main body 13 which is attached to a front cover 15 and a rear cover 16, in which a taking lens 5, a film advancing knob 9 of a film wind-up mechanism and a shutter mechanism 12 are incorporated, and which contains in a light-tight fashion a 135-type photographic film in a cassette as defined by ISO code 1007, 1979 version. The two covers 15 and 16 are provided with claws 23 and holes 25 which are coupled respectively with holes 21 and claws 19. The arrest of the claws 19 and 23 in the holes 21 and 25 prevents the main body 13 from being detached from the covers 15,16.

The main body 13 is provided with a film supplying chamber 28 and a film take-up chamber 29 formed on both lateral sides of the taking lens 5. An unexposed film 30 is wound in a roll and contained in the film supplying chamber 28. A user who has purchased the film unit winds up the film 30 frame by frame at each exposure on a spool 31 in a cassette body 32 loaded in the film take-up chamber 29, and forwards the film unit in its entirety to a photolaboratory when the whole strip of the film is exposed. An operator of the laboratory unloads the cassette body 32 containing the exposed film 30 from the film unit and subjects it to a development and printing in accordance with the conventional photographic processing system. The user receives photoprints and a negative film but does not receive a film housing of the film unit for the reason of inconvenience in processing. The film housing after processing so far has been destroyed and thrown away as a waste product. However, problems of increase in waste products and the destruction of environment caused thereby are raised so that it is taken into consideration to recycle the film housing by withdrawing it after processing.

In view of the above, the front and rear covers 15 and 16 have a construction inappropriate for recycling because they are involved with dirt deposits accumulated during the use of the film unit whereas the claws and holes are fragile enough to be damaged in disassembling the film housing. On the other hand, the main body 13 is usually free from dirt deposits or damage because protected by the two covers 15 and 16. It is highly profitable, if possible, to withdraw the main body 13 with the taking lens 5, the film wind-up mechanism and the shutter mechanism 12.

There is a lens-fitted photographic film unit with an electronic flash device incorporated therein. The electronic flash device is produced at a low cost as well as the film housing in order to provide film units inexpensively. Its construction is improved for this purpose by supporting a light emitting section directly on a printed-circuit board constituting an electronic flash circuit, and by soldering an X contact or synchro switch to the printed-circuit board, which X contact actuates the electronic flash device to emit flashlight in synchronism with the time of fully opening a shutter blade mounted on the film housing. Although the electronic flash device has been disposed of as well as the film housing after processing in the laboratory, it is also taken into account to reuse it by withdrawal.

However, the claws 19 and the holes 21 of the main body 13 attached to the front and rear covers 15 and 16 might be damaged in disassembly by use of a jig, because the claws 19 and 23 are arrested in the holes 21 and 25. Such a damaged film housing 13 causes a loosening in its attachment to front and rear covers newly provided, and a difficulty in assembling a new film unit because of deformation of the claws 19 and the holes 21. Improvement of the structure of the film housing is required.

In the electronic flash device assembled by use of soldering, there is a problem of liability to incomplete emission of flashlight caused by an incomplete soldering of the X contact to the printed-circuit board. Prevention of the incomplete emission necessitates a secure fixation by applying much solder. However, an excessively secure fixation of the X contact on the printed-circuit board raises a problem of much labor in removing the electronic flash device from the film housing for the purpose of reusing the electronic flash device by withdrawing the film housing.

It Is therefore an object of the present invention to provide a lens-fitted photographic film unit from which an incorporated component to be reused can be easily removed without damage after withdrawing the film unit.

In order to achieve the above and other objects and advantages of this invention, a lens-fitted photographic film unit comprises the features of claim 1. With the front cover arranged in front of the main body, and the rear cover arranged behind the main body for being coupled with the front cover so as to fixedly hold the main body therebetween, it is possible to remove the main body without damage in disassmbling the film unit.

In accordance with a preferred embodiment, a flash circuit board of a flash device causes a flash tube to emit light at the time of taking a photograph. A pair of contacts are provided on a surface of the flash circuit board. A pair of elongated metal contact plates are disposed side by side, supported on the photo-taking device section, one pair of ends of the respective contact plates serving for an X contact to be switched on/off in accordance with an operation of the shutter mechanism, an opposite pair of ends of the respective contact plates serving as terminals. Holding means holds the flash circuit board in a state of keeping the contacts of the flash circuit board in contact with the terminals of the contact plates when the flash circuit board is removably inserted on the photo-taking device section. Thus the flash device can be also removed without damage.

The above objects and advantages of the present invention will become more apparent from the following detailed description when read in connection with the accompanying drawings, in which:
Fig. 1 is a perspective view illustrating a lens-fitted photographic film unit according to the present invention;
Fig. 2 is an exploded perspective view illustrating the lens-fitted film unit illustrated in Fig. 1;
Fig. 3 is an exploded perspective view illustrating a lens-fitted film unit according to a preferred embodiment;
Fig. 4 is an exploded perspective view illustrating an important portion of the lens-fitted film unit illustrated in Figs. 1 to 3;
Fig. 5 is a perspective view illustrating a lens board, observed from behind;
Fig. 6 is a perspective view illustrating an X contact;
Fig. 7 is a section view illustrating an important portion of the lens-fitted film unit according to a further preferred embodiment; and
Fig. 8 is an exploded perspective view illustrating a conventional lens-fitted film unit.

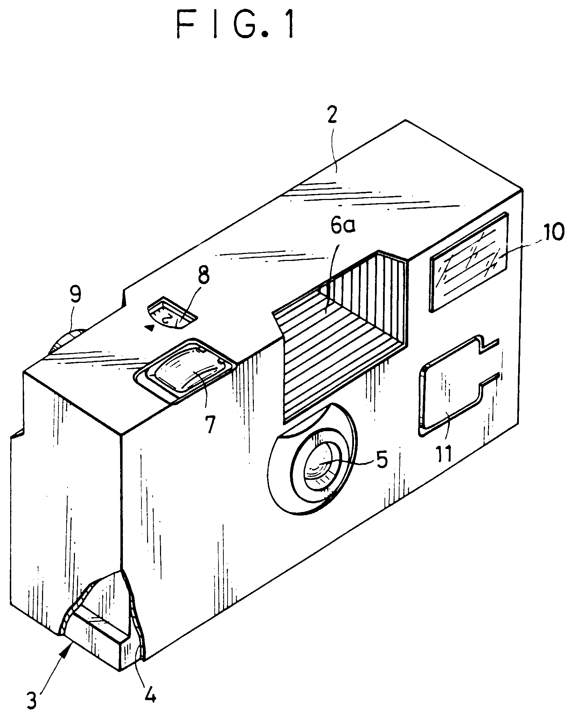

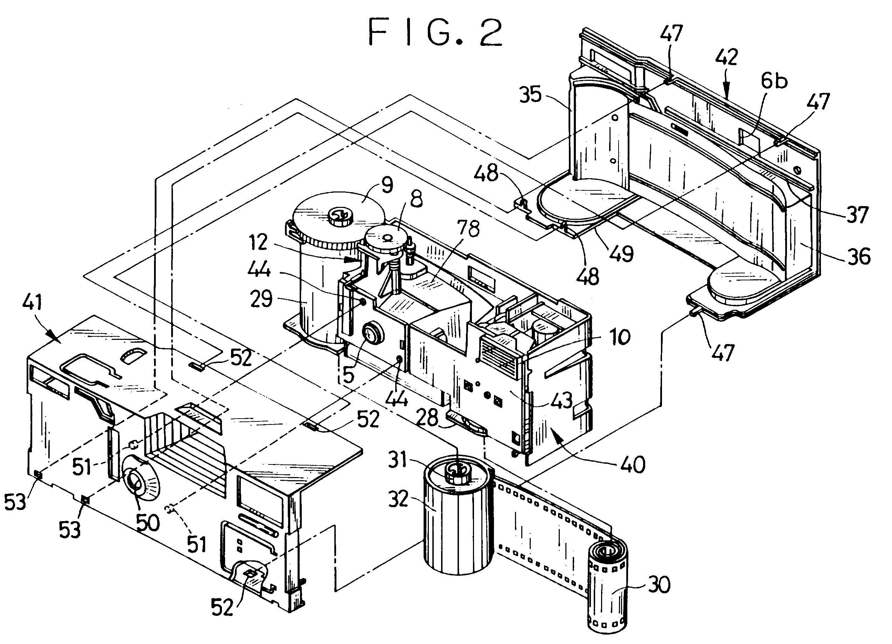

Referring to Fig. 1, a lens-fitted film unit 2 consists of a film housing 3 having a photograph taking mechanism and an external casing 4 for containing the film housing 3. Photographs are taken with the film housing 3 contained in the external casing 4. The external casing 4 is provided so that the lens-fitted film unit 2 looks agreeable, and is for example a paper box with the exterior surface printed. The external casing 4 has openings for exposing a taking lens 5, an object-side finder window 6a, an eye-side finder window 6b (see Fig. 2), a shutter release button 7, a film counter 8, a film advancing knob 9 and a light emitting section 10 containing a flash tube, and a cutting 11 for being pushed to operate a flash switch (not shown) easily.

As illustrated in Fig. 2, the film housing 3 comprises a main body 40, a front cover 41 to be arranged in front thereof, and a rear cover 42 to be arranged behind the main body 40after loading photographic film. The main body 40, the front cover 41 and the rear cover 42 are molded from plastics each integratedly. The main body 40 is provided with mechanisms necessary for taking a photograph, i.e. the taking lens 5, the film counter 8, a shutter mechanism 12, a film wind-up mechanism and an electronic flash device 43. Holes 44 are provided with the front side of the main body 40 for positioning it with respect to the front cover 41. The main body 40 is provided with a film take-up chamber 29 for containing a cassette body 32 of a 35 mm film cassette, a film supplying chamber 28 for containing a roll of unexposed film 30 e.g. negative film, and an exposure station including a light-shielding tube 78 defined between the two chambers 28 and 29. It is noted that a rotatable spool may be provided in the film supplying chamber 28, and that the roll of film 30 may be wound around it.

The unexposed film 30 is contained in the cassette body 32 with a film trailer attached to a spool 31 of the cassette. When the cassette is loaded in the main body 40, the unexposed film 30 is drawn out of the cassette body 32 and wound in a roll.

A plurality of arresting claws 47 and 48 are formed on the rear cover 42 on the top and the bottom for attaching the rear cover 42 to the front cover 41. A bottom surface 49 provided with the arresting claws 48 is in the shape of a lid downward openable so as to unload the cassette therefrom after completing exposure. Reference numerals 35 and 36 designate projections to be fitted on the chambers 28 and 29 in order to position the main body 40 on the rear cover 42. A groove 37 is formed around the projections 35 and 36 to be fitted on a ridge (not shown) formed behind the main body 40. The groove 37 with the ridge fitted therein forms a labyrinth seal to shield the two chambers 28 and 29 from light.

An opening 50 is formed on the front cover 41 through which the taking lens 5 is directed to a view field. The rear surface of the front cover 41 around the opening 50 is provided with pins 51 to be fitted in the holes 44 of the main body 40. Arresting holes 52 and 53 are formed on the rear cover 41 on the top and the bottom in the positions corresponding to the arresting claws 47 and 48 formed on the rear cover 42. The arrest between the claws 47 and 48 and the holes 52 and 53 causes the front and rear covers 41 and 42 to hold the main body 40 fixedly therebetween in a fixed state.

The processes of assembling the lens-fitted film unit as constructed above is described now. After mounting the above-described mechanisms on the main body 40 and loading the film 30 in the cassette body 32 therein, the rear surface of the main body 40 is fitted on the front surface of the rear cover 42. When the pins 51 of the front cover 41 is inserted in the holes 44 of the main body 40, the main body 40 is fitted on the front cover 41, and is never displaced even when pushed by the rear cover 42. The claws 47 and 48 arrest the holes 52 and 53 so as to attach the front cover 41 to the rear cover 42 with the main body 40 fixedly held thereby. Accordingly, the main body 40 can be removed by disengaging the claws 47 and 48 without damaging the main body 4 when the used film cassette submitted to a laboratory is disassembled by applying a tool or a jig. In order to disengage the claws 47 and 48 with ease, it is possible as disclosed in a prior Japanese application filed by the same applicant to apply a construction of forming a slit around the claws for making it easy to deform the claws in the disengaging direction.

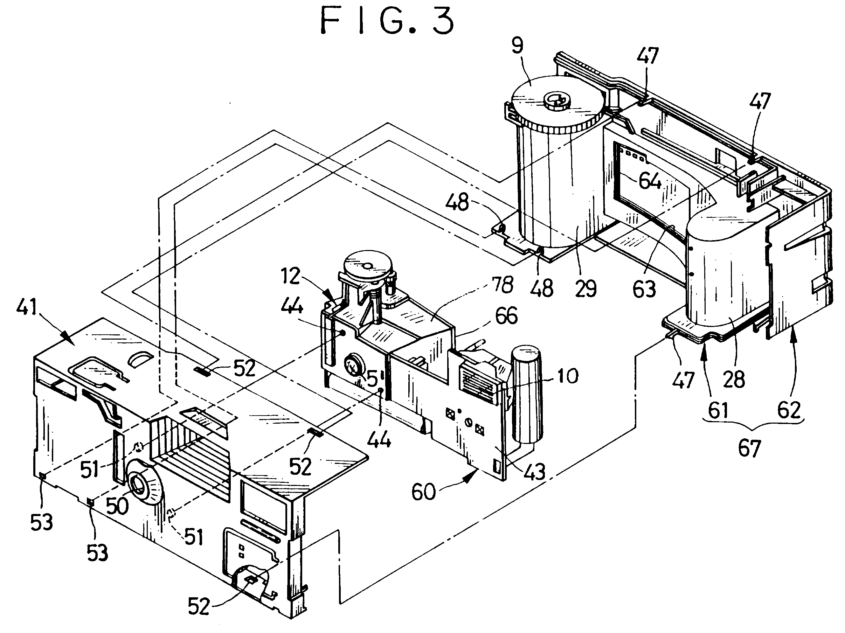

Another preferred embodiment of the inventive lens-fitted film unit Is now described referring to Fig. 3. A rear cover 62 is attached to a film holder 61 including the two chambers 23 and 29, whereas a light-shielding tube 78 or exposure tunnel is incorporated in a photo-taking device section 60, which is provided with the taking lens 5, the shutter mechanism 12 and the electronic flash device 43. A film containing unit 67 has the film holder 61 fixed on the rear cover 62 either by adhesion or by an arrest between claws and holes, is loaded with the unexposed film 30 therein, and has the film advancing knob 9 on the top of the film take-up chamber 29. An exposure station 63 is formed between the two chambers 28 and 29, and is provided with a peripheral groove 64 around it to be fitted on a rear peripheral edge 66 defined by the light-shielding tube 78.

Insertion of the rear edge 66 in the peripheral groove 64 positions the film containing unit 67 on the photo-taking device section 60, whereas the inside of the exposure station 63 is shielded from light.

After positioning the film containing unit 67 on the photo-taking device section 60, the front cover 41 is positioned on the photo-taking device section 60 by inserting the pins 51 in the holes 44 in a manner similar to the embodiment illustrated in Fig. 2. The claws 47 and 48 formed on the rear cover 62 arrest the holes 52 and 53 formed on the front cover 41 to finish the assembly of the film housing 2.

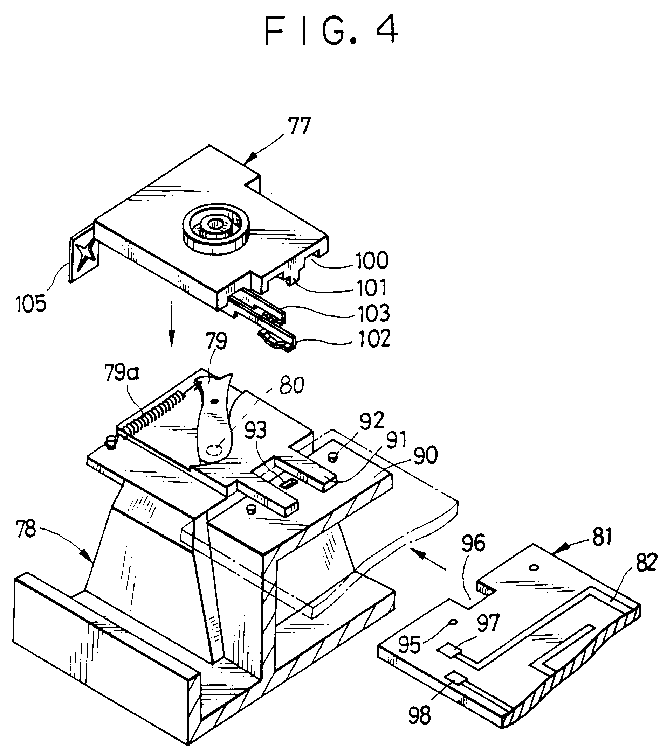

As seen in Fig. 4 the above-described lens-fitted film unit has an electronic flash device in an easily removable structure by making an improvement of construction of attaching an electronic flash circuit to an X contact.

A lens board 77 for holding the taking lens 5 is mounted on the light-shielding tube 78, which is formed between the two chambers 28 and 29. A shutter blade 79 is provided on the front side of the light-shielding tube 78, biassed by a spring 79a, and covers an opening 80, indicated by the broken line, except for the photo-taking time for exposure. A printed-circuit board 81 holding the light emitting section 10 is mounted on the right side of the light-shielding tube 78. A circuit pattern 82 is printed on the front surface of the printed-circuit board 81, to whose rear surface there are connected a terminal for contact with a negative terminal of a battery and a capacitor. The circuit pattern 82 together with the cacacitor constitutes the electronic flash circuit 43.

The lateral side of the light-shielding tube 78 is provided with a supporting plate 90 and a pair of supporting members 91 integratedly formed for supporting the printed-circuit board 81. The supporting plate 90 and the supporting members 91 define a thin spacing therebetween in which the printed-circuit board 81 is inserted in the direction indicated by the arrow. The supporting plate 90 is provided with a pair of projections 92 for positioning the printed-circuit board 81 and an arresting hole 93 for positioning and supporting the lens board 77 on the light-shielding tube 78 by arresting a claw 101 of the lens board 77 later to be described. It is noted that the projections 82 may be formed on the back surface of the supporting members 91 instead of the supporting plate 90. The construction of supporting the printed-circuit board 81 is not limited by the description herein, to which variations may be made.

There are formed a pair of holes 95 to be fitted on the projections 92 and a recess 96 for preventing the arresting hole 93 from being covered by the printed-circuit board 81. The circuit pattern 82 has lands 97 and 98 to be connected to the X contact.

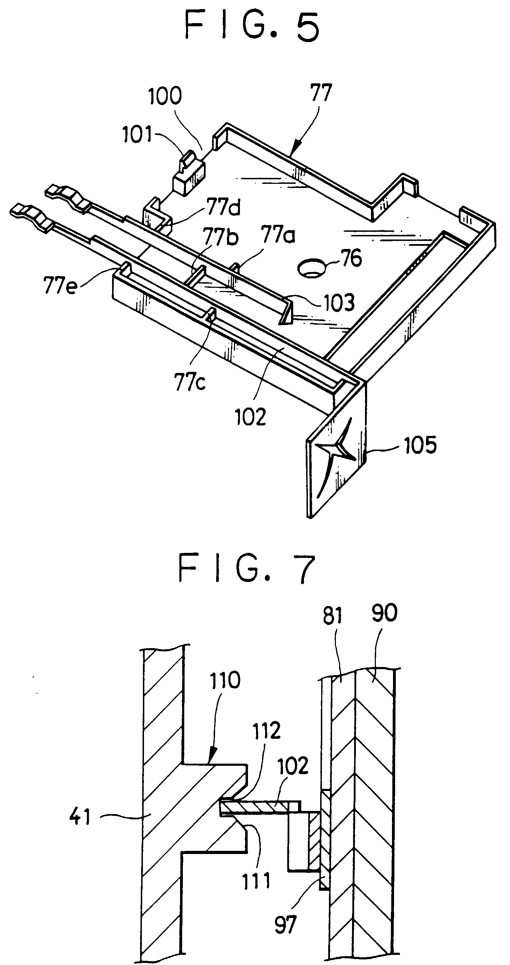

As illustrated in Fig. 5, the lens board 77 is provided with a pair of recesses 100 and the arresting claw 101 formed thereon. The recesses 100 are fitted on the supporting members 91 to position the lens board 77. A pair of metal plates 102 and 103 constituting the above X contact are mounted on the lens board 77. Five ridges 77a to 77e are formed on the lens board 77. The ridges 77b, 77c and 77e are in contact with the metal plate 102 whereas the ridges 77a, 77b and 77d are in contact with the metal plate 103, which metal plates are kept in parallel thereby. A reference numeral 76 designates an opening for passing light coming through the taking lens 5.

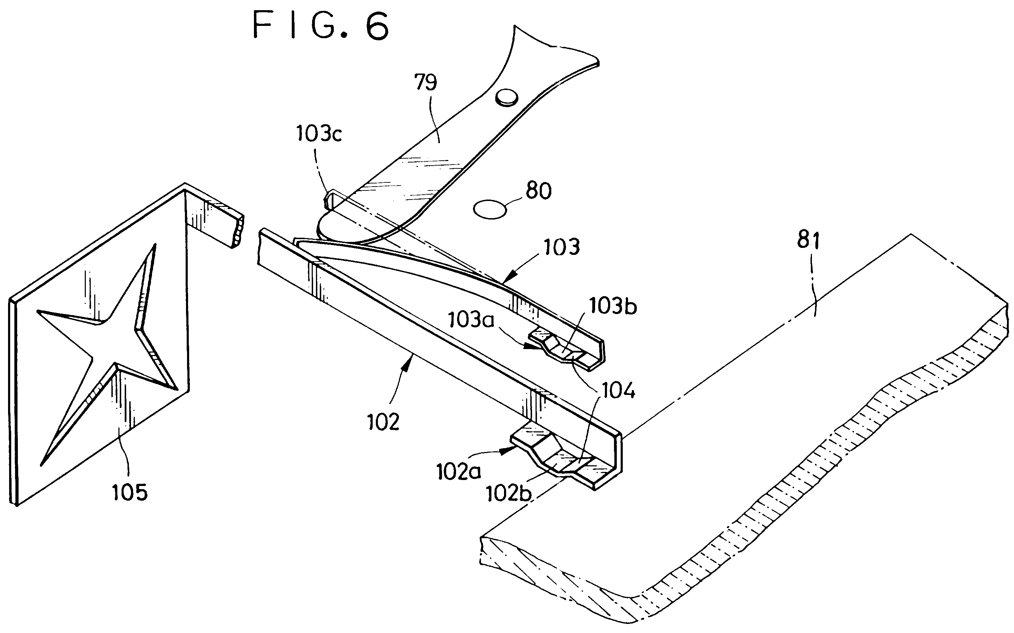

Ends of the metal plates 102 and 103 are bent vertically in the shape of a letter L along the widthwise direction, and form contact portions 102a and 103a to be in contact with the lands 97 and 98 as illustrated in Fig. 6. Middles 102b and 103b of the contact portions 102a and 103a project downward as compared with both lateral sides of the contact portions 102a and 103a, and are located to be lower than the upper surface of the printed-circuit board 81. Inclined surfaces 104 are formed to be connected to the middles 102b and 103b. When the printed-circuit board 81 is slid on the supporting plate 90 in the direction of the arrow in Fig. 4, the advancing edge of the printed-circuit board 81 is in contact with the inclined surfaces 104 to advance to the position under the contact portions 102a and 103a. Therefore, the contact portions 102a and 103a press the lands 97 and 98 in contact.

The other end of the metal plate 103 is provided with a bent portion 103c, which is in contact with the metal plate 102 when the metal plate 103 is pressed by the shutter blade 79. The other end of the metal plate 102 is provided with a terminal 105 to be in contact with a positive terminal of the battery.

The process of assembling the film unit as above is described now. The main body 40,60 is assembled by mounting the lens board 77 with the metal plates 102 and 103 on the light-shielding tube 78, whereas the light emitting section 10 is mounted on the printed-circuit board 81. The printed-circuit board 81 is mounted on the main body 40,60 after assembling the main body 40,60 and the printed-circuit board 81. The printed-circuit board 81 is slid on the supporting plate 90 in the direction of the arrow so as to insert the advancing end between the supporting plate 90 and the supporting members 91. The advancing end of the printed-circuit board 81 presses the contact portions 102a and 103a upward by contact with the inclined surfaces 104. A further slide brings the printed-circuit board 81 in contact with the projections 92. By applying a deforming force on to both lateral edges, the printed-circuit board 81 is curved slightly in the shape of a letter U, and inserted by keeping the curved state until the advancing end is in contact with the light-shielding tube 78.

When the printed-circuit board 81 is released from the deforming force, the printed-circuit board 81 becomes plane so that the holes 95 are fitted on the projections 92 with the printed-circuit board 81 supported and positioned on the light-shielding tube 78. Because the lens board 77 is positioned on the light-shielding tube 78, the contact portions 102a and 103a are kept in reliable contact with the lands 97 and 98.

In order to remove the printed-circuit board 81 from the film unit 2 after removing the front cover 41, both lateral edges of the printed-circuit board 81 are upward raised by deformation to release the projections 92 from the holes 95 so that the printed-circuit board 81 becomes slidable in the direction toward the right in Fig. 4. A slide of the printed-circuit board 81 releases its attachment to the light-shielding tube 78 with the metal plates 102 and 103 left on the main body 40,60.

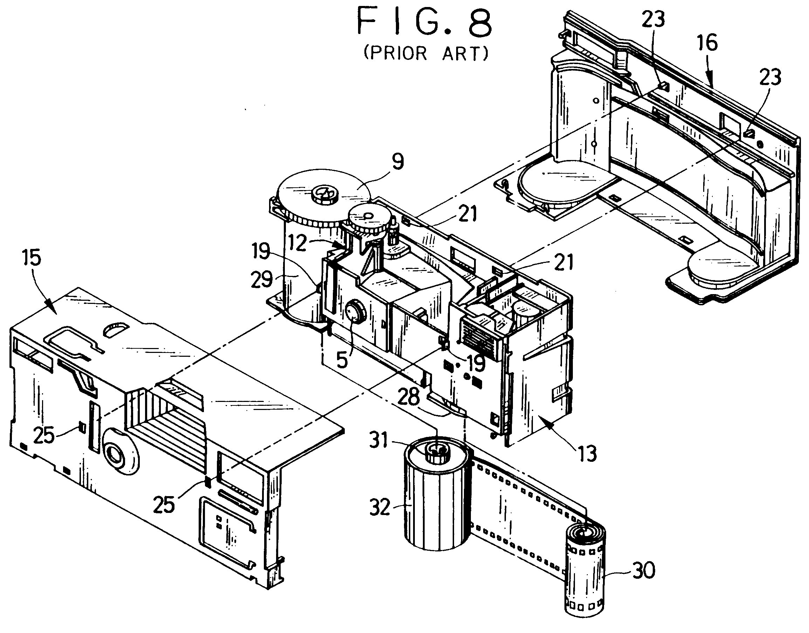

Fig. 7 illustrates a further preferred embodiment in which the contact portions 102a and 103a of the X contact are pressed with an additional pressure on the printed-circuit board 81 so as to improve the connection of the metal plates and the electronic flash circuit. The construction illustrated in Fig. 7 is of pressing one of the two contact portions, while both of the contact portions 102a and 103a are actually pressed. The printed-circuit board 81 is similarly mounted on the front side of the supporting plate 90. The metal plate 102 arranged on the front side of the printed-circuit board 81 is pressed by a projection 110 formed on the front cover 41, and held between the projection 110 and the land 97. The projection 110 is provided with a groove 112, which has guide surfaces 111, which correct the position of the metal plate 102 when the metal plate 102 is deviated in position.

When the printed-circuit board 81 is mounted on both the main body 40,60 and the front cover 71, the top of the projection 110 is in contact with the metal plate 102. Even if the position of the metal plate 102 is deviated upward or downward, it is appropriately inserted in the groove 112 by assistance of the guide surfaces 111. When the front cover 41 is attached by use of the claws, the groove 112 presses the metal plate 102 to the right in Fig. 7 against the printed-circuit board 81. Thus the contact portion 102a is pressed against the land 97 in a reliable contact. It is noted that, if the interval between the projection 110 and the printed-circuit board 81 is excessively small as compared with the metal plate 102, the pressing force between the contact portion 102a and the land 97 is regulated by deforming the contact portion 102a.

It is to be noted that, on the assumption that both covers are dissolved and made into pellets, the front cover and the rear cover may be attached together by use of ultrasonic welding instead of arresting claws in holes in the same positions of the arrest.

The above-described embodiments have such a construction of winding the film that the whole strip of film is drawn out of the cassette previously in the factory, and wound in the cassette frame by frame at exposure. However, a lens-fitted photographic film unit according to the present invention may have a construction of requiring no cassette or containing two cassettes respectively in the film supplying chamber and the film take-up chamber. Although the above-described film housing in the inventive film unit consists of three components i.e. the front cover, the rear cover and the main body, it may consists of four components including an upper cover separated from the above front cover, so that each of the front and rear covers is attached to the upper cover so as to support the main body by/between the front and rear covers.

Although the present invention has been fully described by way of the preferred embodiments thereof with reference to the accompanying drawings, it is intended to cover all changes and modifications apparent to those having skill in this field which are within the scope of the appended claims.

## Claims

1. A lens-fitted photographic film unit (2) in which a film supplying chamber (28) for containing an unexposed photographic film (30) and a film take-up chamber (29) for winding up said film once the film has been exposed on an exposure aperture are arranged on each lateral side of said exposure aperture, and which includes a taking lens (5), a shutter mechanism (12), a film wind-up mechanism (9) for winding said exposed film, said lens-fitted film unit (2) comprising:
a film containing section (40,61) having a portion defining said exposure aperture, said film supplying chamber (28), said film take-up chamber (29) and said film wind-up mechanism;
a rear cover (42,62) arranged behind said film containing section (40,61);
a photo-taking device section (40,60) having said taking lens (5) and said shutter mechanism (12);
a front cover (41) arranged in front of said film containing section (40,61); and
coupling means (47,48,52,53) for fixedly receiving said film containing section (40,61) and said photo-taking device section (40,60) between said two covers (41,42,62),
**characterised in that**
said coupling means (47,48,52,53) are arranged to directly couple said front and rear covers (41,42,62) together so as to form the external contour of said lens-fitted photographic film unit (2), said film containing section (40,61) and said photo-taking device section (40,60) being disposed and fixedly held between said two covers (41,42,62) in such a manner that said photo-taking section can be removed by detaching said coupling means (47,48,52,53).

2. A lens-fitted photographic film unit as defined in claim 1, wherein said photo-taking device section (40,60) includes a light-shielding tube (78) arranged between said taking lens (5) and said exposure aperture, and said taking lens (5) and said shutter mechanism (12) are mounted on said light-shielding tube (78).

3. A lens-fitted photographic film unit as defined in claim 1 or 2, wherein said film containing section and said photo-taking device section are unified as a main body (40), and said rear and front covers (41,42) are coupled together so as to fixedly hold said main body (40) with said unexposed film (30) loaded therein between said rear and front covers (41,42).

4. A lens-fitted photographic film unit as defined in claims 1 or 2 , wherein said film containing section (61) is unified as a film containing unit (67) by attaching said rear cover (62) behind said film containing section (61) so as to shield a rear side from light after loading said unexposed film (30) in said film containing section (61); and said rear and front covers (41,62) are coupled together so as to fixedly hold said photo-taking device section (60) between said film containing unit (67) and said front cover (41).

5. A lens-fitted photographic film unit as defined in claim 4, wherein a groove (64) is formed on a periphery of said exposure aperture in a rectangular manner, and a rear edge (66) of said light-shielding tube (78) of said photo-taking device section (60) is fitted in said groove (64).

6. A lens-fitted photographic film unit as defined in any one of claims 1 to 5, wherein a coupling claw (47,48) is formed on one of said front and rear covers (41,42,62), and a coupling hole (52,53) is formed on the other for coupling said claw (47,48) therewith.

7. A lens-fitted photographic film unit as defined in any one of claims 1 to 6, wherein a cassette (32) having a rotatable spool is contained in said film take-up chamber (29), and a film roll in which said unexposed film (30) is wound after being drawn out of said cassette is contained in said film supplying chamber (28).

8. A lens-fitted photographic film unit as defined in any one of claims 1 to 7, wherein said taking lens (5) is mounted on a lens board (72), and at least two positioning pins (51) formed on a rear side of said front cover (41) are fitted in at least two holes (44) formed on said lens board (77).

9. A lens-fitted photographic film unit as defined in any one of claims 1 to 8, wherein said rear cover (42,62) is substantially in a shape of a letter L, and includes a first portion for shielding light from behind said film supplying chamber (28), said film take-up chamber (29) and said exposure aperture, and a second portion for shielding light from a bottom of said film supplying chamber (28) and said film take-up chamber (29).

10. A lens-fitted photographic film unit as defined in any one of claims 1 to 9, wherein said front cover (41) is substantially in a shape of a letter L, and includes a third portion to be disposed in front of said photo-taking device section (40,60) and a fourth portion to be disposed on a top of said film containing section (40,61).

11. A lens-fitted photographic film unit as defined in claims 9 and 10, wherein a first coupling claw (47) is formed on a top of said first portion, a second coupling claw (48) is formed on a front of said second portion, a first coupling hole (52) is formed on a back of said fourth portion for being coupled with said first coupling claw (47), and a second coupling hole (53) is formed on a bottom of said third portion for being coupled with said second coupling claw (48).

12. A lens-fitted photographic film unit as defined in any one of claims 1 to 11, further comprising:
a flash circuit board (81) of a flash device (43) for causing a light emitting section (10) to emit light at the time of taking a photograph;
a pair of contacts (97,98) provided on a surface of said flash circuit board (81);
a pair of elongated metal contact plates (102,103) disposed side by side, supported on said photo-taking device section (60), one pair of ends of said respective contact plates (102,103) serving for an X contact to be switched on/off in accordance with an operation of said shutter mechanism (12), an opposite pair of ends of said respective contact plates (102,103) serving as terminals; and
holding means for holding said flash circuit board (81) in a state of keeping said contacts (97,98) of said flash circuit (81) in a state of keeping said contacts (97,98) of said flash circuit board (81) in contact with said terminals of said contact plates (102,103) when said flash circuit board (81) is removably inserted on said photo-taking device section (60).

13. A lens-fitted photographic film unit as defined in claim 12, wherein said light emitting section (10) is mounted on said flash circuit board (81).

14. A lens-fitted photographic film unit as defined in claim 12 or 13, wherein one of said contact plates (103) is pressed by a portion of a shutter blade (79) of said shutter mechanism (12) to be in contact with the other contact plate (102) when said shutter blade (79) takes an open position.

15. A lens-fitted photographic film unit as defined in any one of claims 12 to 14, wherein said contact plates (102,103) are attached to a lens board (77) for holding said taking lens (5).

16. A lens-fitted photographic film unit as defined in any one of claims 12 to 15, wherein said contacts of said flash circuit board (81) are lands (97,98), and said terminals of said contact plates (102,103) are bent in a shape of a letter L and inclined so as to be in contact with said lands (97,98) with resilience.

17. A lens-fitted photographic film unit as defined in any one of claims 12 to 16, wherein said holding means includes a supporting plate (90) for supporting said flash circuit board (81) from behind; and a supporting member (91) for supporting said flash circuit board (81) supported on said supporting plate (90) from a front.

18. A lens-fitted photographic film unit as defined in claim 17, wherein said supporting plate (90) and said supporting member (91) are formed on an outside of said light-shielding tube (78) arranged between said taking lens (5) and said exposure aperture.

19. A lens-fitted photographic film unit as defined in any one of claims 12 to 18, wherein said front cover (41) further includes means (110) for pressing said contact plates (102,103) against said flash circuit board (81).

20. A lens-fitted photographic film unit as defined in claim 19, wherein said pressing means includes: at least one projecting portion (110) formed on said rear side of said front cover (41) for projecting toward said flash circuit board (81); two grooves (112) formed on said projecting portion (110) for receiving said contact plates (102,103) in order to keep said contact plates (102,103) in contact with said flash circuit board (81); and inclined surfaces (111) formed on said projecting portion for guiding said contact plates (102,103) to be inserted in said grooves (112).

## Patentansprüche

1. Objektivbestückte, fotografische Filmeinheit (2), bei der eine Filmzufuhrkammer (28) zum Aufnehmen eines unbelichteten fotografischen Films (30) und eine Filaufnahmekammer (29) zum Aufwickeln des Films, nachdem der Film an einer Belichtungsöffnung belichtet wurde, beidseitig der Belichtungsöffnung angeordnet sind, und die ein Objektiv (5), einen Verschlußmechanismus (12) einen Filmaufwickelmechanismus (9) zum Aufwickeln des belichteten Films enthält, wobei die objektivbestückte Filmeinheit (2) enthält:
einen filmenthaltenden Abschnitt (40, 61), der einen die Belichtungsöffnung definierenden Bereich, die Filmzufuhrkammer (28), die Filmaufnahmekammer (29) und den Filmaufwickelmechanismus enthält;
eine rückwärtige Abdeckung (42, 62), die hinter dem filmenthaltenden Abschnitt (40, 60) angeordnet ist;
einen Fotografiervorrichtungsabschnitt (40, 60), der das Objektiv (5) und den Verschlußmechanismus (12) enthält;
eine vordere Abdeckung (41), die vor dem filmenthaltenden Abschnitt (40, 61) angeordnet ist; und
eine Verbindungseinrichtung (47, 48, 52, 53) zum befestigenden Aufnehmen des filmenthaltenden Abschnittes (40, 61) und des Fotografiervorrichtungsabschnittes (40, 60) zwischen den beiden Abdeckungen (41, 42, 62), **dadurch gekennzeichnet**, daß die Verbindungseinrichtung (47, 48, 52, 53) so angeordnet ist, daß sie die vordere und rückwärtige Abdeckung (41, 42, 62) direkt miteinander verbindet, um die äußere Kontur der objektivbestückten, fotografischen Filmeinheit (2) zu bilden, wobei der filmenthaltende Abschnitt (40, 61) und der Fotografiervorrichtungsabschnitt (40, 60) so zwischen den beiden Abdeckungen (41, 42, 62) angeordnet und festgehalten sind, daß der Fotografierabschnitt entfernt werden kann, indem man die Verbindungseinrichtung (47, 48, 52, 53) löst.

2. Objektivbestückte, fotografische Filmeinheit nach Anspruch 1, wobei der Fotografiervorrichtungsabschnitt (40, 60) ein lichtabschirmendes Röhrengehäuse (78) enthält, das zwischen dem Objektiv (5) und der Belichtungsöffnung angeordnet ist, und daß das Objektiv (5) und der Verschlußmechanismus (12) an dem lichtabschirmenden Röhrengehäuse (78) montiert sind.

3. Objektivbestückte, fotografische Filmeinheit nach Anspruch 1 oder 2, wobei der filmenthaltende Abschnitt und der Fotografiervorrichtungsabschnitt zu einem Hauptkörper (40) zusammengefaßt sind, und wobei die rückwärtige und die vordere Abdeckung (41, 42) so miteinander gekoppelt sind, daß sie den Hauptkörper (40), beladen mit dem unbelichteten Film (30), zwischen der rückwärtigen und der vorderen Abdeckung (41, 42) festhalten.

4. Objektivbestückte, fotografische Filmeinheit nach Anspruch 1 oder 2, wobei der filmenthaltende Bereich (61) zu einer filmenthaltenden Einheit (67) zusammengefaßt ist, indem die rückwärtige Abdeckung (62) hinter den filmenthaltenden Abschnitt (61) befestigt ist, so daß die rückwärtige Seite nach dem Beladen des filmenthaltenden Abschnittes (61) mit dem unbelichteten Film (30) gegen Licht abgeschirmt ist, und wobei die rückwärtige und die vordere Abdeckung (41, 62) so miteinander verbunden sind, daß sie den Fotografiervorrichtungsabschnitt (60) zwischen der filmenthaltenden Einheit (67) und der vorderen Abdekkung (41) festhalten.

5. Objektivbestückte, fotografische Filmeinheit nach Anspruch 4, wobei eine Nut (64) in einem Umfang der Belichtungsöffnung in rechtwinkliger Weise ausgebildet ist, und eine rückwärtige Kante (66) des lichtabschirmenden Röhrengehäuses (78) des Fotografiervorrichtungsabschnittes (60) in die Nut (64) eingepaßt ist.

6. Objektivbestückte, fotografische Filmeinheit nach einem der Ansprüche 1 bis 5, wobei eine Verbindungsklaue (47, 48) an einer der vorderen oder rückwärtigen Abdeckungen (41, 42, 62) ausgebildet ist, und eine Kopplungsöffnung (52, 53) an der anderen Abdeckung ausgebildet ist, um die Klaue (47, 48) koppelnd aufzunehmen.

7. Objektivbestückte, fotografische Filmeinheit nach einem der Ansprüche 1 bis 6, wobei in der Filmaufnahmekammer (29) eine Kassette (32) mit einer drehbaren Spule enthalten ist, und wobei eine Filmrolle, in die der unbelichtete Film (30) gewickelt wird, nachdem er aus der Kassette herausgezogen wurde, in der Filmzufuhrkammer (28) enthalten ist.

8. Objektivbestückte, fotografische Filmeinheit nach einem der Ansprüche 1 bis 7, wobei das Objektiv (5) auf einer Objektivplatte (72) montiert ist, und wobei mindestens zwei Positionsstifte (51), die an der rückwärtigen Seite der vorderen Abdekkung (41) ausgebildet sind, in mindestens zwei Öffnungen (44) eingepaßt sind, die an der Objektivplatte (77) ausgebildet sind.

9. Objektivbestückte, fotografische Filmeinheit nach einem der Ansprüche 1 bis 8, wobei die rückwärtige Abdeckung (42, 62) im wesentlichen die Form des Buchstabens L aufweist und einen ersten Bereich enthält, der Licht von hinter der Filmzufuhrkammer (28), der Filmaufnahmekammer (29) und der Belichtungsöffnung abschirmt, und weiterhin einen zweiten Bereich aufweist, um Licht vom Boden der Filmzufuhrkammer (28) und der Filmaufnahmekammer (29) abzuschirmen.

10. Objektivbestückte, fotografische Filmeinheit nach einem der Ansprüche 1 bis 9, wobei die vordere Abdeckung (41) im wesentlichen die Form eines Buchstabens (L) aufweist, und einen dritten Bereich, der vor dem Fotografiervorrichtungsabschnitt (40, 60) anzuordnen ist, und einen vierten Bereich aufweist, der oben auf dem filmenthaltenden Abschnitt (40, 61) anzuordnen ist.

11. Objektivbestückte, fotografische Filmeinheit nach den Ansprüchen 9 und 10, wobei eine erste Verbindungsklaue (47) oben am ersten Bereich, eine zweite Verbindungsklaue (48) vorn am zweiten Bereich, eine erste Verbindungsöffnung (52) hinten am vierten Bereich zum Verbinden mit der ersten Verbindungsklaue (47), ausgebildet sind, und eine zweite Verbindungsöffnung (53) an einem Boden des dritten Bereichs ausgebildet ist, um mit der zweiten Verbindungsklaue (48) verbunden zu werden.

12. Obejktivbestückte, fotografische Filmeinheit nach einem der Ansprüche 1 bis 11, ferner enthaltend:
eine Blitz-Schaltungsplatte (81) einer Blitzeinrichtung (43), um einen Lichtaussendeabschnitt (10) zu veranlassen, zum Zeitpunkt des Fotografierens Licht auszusenden;
ein Kontaktpaar (97, 98), die auf einer Oberfläche der Blitz-Schaltungsplatte (81) vorgesehen sind;
ein Paar langgestreckter, Seite an Seite angeordneter Metallkontaktplatten (102, 103), die vom Fotografiervorrichtungsabschnitt (60) getragen sind, wobei ein Paar der Enden der entsprechenden Kontaktplatten (102, 103) als X-Kontakt dient, um entsprechend der Betätigung des Verschlußmechanismus (12) an-und abgeschaltet zu werden, und wobei ein gegenüberliegendes Paar der Enden der entsprechenden Kontaktplatten (102, 103) als Anschlüsse dienen; und
einer Halteeinrichtung zum Halten der Blitz-Schaltungsplatte (81) in einem Zustand, bei dem die Kontakte (97, 98) der Blitz-Schaltung (81) in einem Zustand gehalten sind, in dem die Kontakte (97, 98) der Blitz-Schaltungsplatte (81) in Kontakt mit den Anschlüssen der Kontaktplatten (102, 103) gehalten sind, wenn die Blitz-Schaltungsplatte (81) entfernbar in den Fotografiervorrichtungsabschnitt (60) eingesetzt ist.

13. Objektivbestückte, fotografische Filmeinheit nach Anspruch 12, wobei der Lichtaussendeabschnitt (10) an der Blitz-Schaltungsplatte (81) montiert ist.

14. Objektivbestückte, fotografische Filmeinheit nach Anspruch 12 oder 13, wobei eine der Kontaktplatten (103) durch einen Bereich einer Verschlußlamelle (79) des Verschlußmechanismus (12) gepreßt wird, um in Kontakt zu stehen mit der anderen Kontaktplatte (102), wenn die Verschlußlamelle (79) eine offene Position einnimmt.

15. Objektivbestückte, fotografische Filmeinheit nach einem der Ansprüche 12 bis 14, wobei die Kontaktplatten (102, 103) an einer Objektivplatte (77) zum Halten des Objektivs (5) angeordnet sind.

16. Objektivbestückte, fotografische Filmeinheit nach einem der Ansprüche 12 bis 15, wobei die Kontakte der Blitz-Schaltungsplatte (81) Vorsprünge (97, 98) sind, und wobei die Anschlüsse der Kontaktplatten (102, 103) in Form des Buchstabens (L) gebogen sind, und schrägverlaufen, so daß sie federnd mit den Vorsprüngen (97, 98) in Kontakt stehen.

17. Objektivbestückte, fotografische Filmeinheit nach einem der Ansprüche 12 bis 16, wobei die Halteeinrichtung eine Tragplatte (90) zum Unterstützen der Blitz-Schaltungsplatte (81) von hinten und ein Tragteil (91) aufweist, zum Unterstützen der Blitz-Schaltungsplatte (81), die von der Tragplatte (90) getragen wird, von vorn.

18. Objektivbestückte, fotografische Filmeinheit nach Anspruch 17, wobei die Tragplatte (90) und das Tragteil (91) an einer Außenseite des lichtabschirmenden Röhrengehäuses (78) ausgebildet sind, daß zwischen dem Objektiv (5) und der Belichtungsöffnung angeordnet ist.

19. Objektivbestückte, fotografische Filmeinheit nach einem der Ansprüche 12 bis 18, wobei die vordere Abdeckung (41) ferner eine Einrichtung (110) zum Pressen der Kontaktplatten (102, 103) gegen die Blitz-Schaltungsplatte (81) enthält.

20. Objektivbestückte, fotografische Filmeinheit nach Anspruch 19, wobei die Drückeinrichtung enthält:
mindestens einen vorspringenden Bereich (110), der an der Rückseite der vorderen Abdeckung (41) zum Vorstehen in Richtung auf die Blitz-Schaltungsplatte (81) ausgebildet ist;
zwei Nuten (112), die am vorspringenden Bereich (110) ausgebildet sind, um die Kontaktplatten (102, 103) aufzunehmen, um die Kontaktplatten (102, 103) in Kontakt mit der Blitz-Schaltungsplatte (81) zu halten; und
abgeschrägte Oberflächen (111), die am vorspringenden Bereich ausgebildet sind, um die Kontaktplatten (102, 103) beim Einsetzen in die Nuten (112) zu leiten.

## Revendications

1. Ensemble (2) à pellicule photographique muni d'un objectif dans lequel une chambre (28) débitrice de pellicule destinée à contenir une pellicule photographique non exposée (30) et une chambre (29) réceptrice de pellicule destinée à enrouler la pellicule lorsque celle-ci a été exposée par une ouverture d'exposition sont placées de chaque côté de l'ouverture d'exposition, et qui comprend un objectif (5) de prise de vues, un mécanisme obturateur (12), et un mécanisme (9) d'enroulement de la pellicule exposée, l'ensemble (2) à pellicule muni d'une lentille comprenant :
une section (40, 61) contenant une pellicule et ayant une partie délimitant l'ouverture d'exposition, la chambre (28) débitrice de pellicule, la chambre (29) réceptrice de pellicule et le mécanisme d'enroulement de pellicule,
un couvercle arrière (42, 62) placé derrière la section (40, 61) contenant la pellicule,
une section (40, 60) de dispositif de prise de photographie ayant l'objectif (5) de prise de vues et le mécanisme obturateur (12),
un couvercle avant (41) placé en avant de la section (40, 61) qui contient la pellicule, et
un dispositif d'accouplement (47, 48, 52, 53) destiné à loger en position fixe la section (40, 61) contenant la pellicule et la section (40, 60) du dispositif de prise de photographie entre les deux couvercles (41, 42, 62),
caractérisé en ce que
le dispositif d'accouplement (47, 48, 52, 53) est disposé afin qu'il accouple directement les couvercles avant et arrière (41, 42, 62) l'un sur l'autre pour la formation du contour extérieur de l'ensemble (2) à pellicule photographique muni d'un objectif, la section (40, 61) contenant la pellicule et la section (40, 60) de dispositif de prise de photographie étant disposées et maintenues en position fixe entre les deux couvercles (41, 42, 62) de manière que la section de prise de photographie puisse être retirée par séparation du dispositif d'accouplement (47, 48, 52, 53).

2. Ensemble à pellicule photographique muni d'un objectif selon la revendication 1, dans lequel la section (40, 60) de dispositif de prise de photographie comprend un tube (78) de protection contre la lumière placée entre l'objectif (5) de prise de vues et l'ouverture d'exposition, et l'objectif (5) de prise de vues et le mécanisme obturateur (12) sont montés sur le tube (78) de protection contre la lumière.

3. Ensemble à pellicule photographique muni d'un objectif selon la revendication 1 ou 2, dans lequel la section contenant la pellicule et la section du dispositif de prise de photographie sont associées sous forme d'un corps principal (40), et les couvercles arrière et avant (41, 42) sont couplés afin qu'ils maintiennent en position fixe le corps principal (40) avec le film non exposé (30) chargé à l'intérieur entre les couvercles arrière et avant (41, 42).

4. Ensemble à pellicule photographique muni d'un objectif selon la revendication 1 ou 2, dans lequel la section (61) contenant la pellicule est rendue solidaire sous forme d'un ensemble (67) contenant une pellicule par fixation du couvercle arrière (62) derrière la section (61) contenant la pellicule afin que la face arrière soit protégée contre la lumière après le chargement de la pellicule non exposée (30) dans la section (61) contenant la pellicule, et les couvercles arrière et avant (41, 62) sont couplés mutuellement afin qu'ils maintiennent en position fixe la section (60) du dispositif de prise de photographie entre l'ensemble (67) contenant la pellicule et le couvercle avant (41).

5. Ensemble à pellicule photographique muni d'un objectif selon la revendication 4, dans lequel une gorge (64) est formée à la périphérie de l'ouverture d'exposition sous forme rectangulaire, et un bord arrière (66) du tube (78) de protection contre la lumière de la section (60) du dispositif de prise de photographie est logé dans la gorge (64).

6. Ensemble à pellicule photographique muni d'un objectif selon l'une des revendications 1 à 5, dans lequel une griffe (47, 48) d'accouplement est formée sur l'un des couvercles avant et arrière (41, 42, 62), et un trou d'accouplement (52, 53) est formé sur l'autre pour l'accouplement avec la griffe (47, 48).

7. Ensemble à pellicule photographique muni d'un objectif selon l'une des revendications 1 à 6, dans lequel une cassette (32) ayant un bobinot rotatif est logée dans la chambre (29) réceptrice de pellicule, et un rouleau de pellicule dans lequel la pellicule non exposée (30) est enroulée après avoir été retirée de la cassette et logée dans la chambre (28) débitrice de pellicule.

8. Ensemble à pellicule photographique muni d'un objectif selon l'une des revendications 1 à 7, dans lequel l'objectif (5) de prise de vues est monté sur une carte (72) d'objectif, et deux broches de positionnement au moins (51) formées à une face arrière du couvercle avant (41) se logent dans deux trous au moins (44) formés sur la carte (77) d'objectif.

9. Ensemble à pellicule photographique muni d'un objectif selon l'une quelconque des revendications 1 à 8, dans lequel le couvercle arrière (42, 62) a pratiquement la forme de la lettre L et comprend une première partie de protection contre la lumière depuis l'arrière de la chambre (28) débitrice de pellicule, la chambre (29) réceptrice de pellicule et l'ouverture d'exposition, et une seconde partie de protection contre la lumière provenant d'une partie inférieure de la chambre (28) débitrice de pellicule et de la chambre (29) réceptrice de pellicule.

10. Ensemble à pellicule photographique muni d'un objectif selon l'une des revendications 1 à 9, dans lequel le couvercle avant (41) a pratiquement la forme de la lettre L et comprend une troisième partie destinée à être placée en avant de la section (40, 60) du dispositif de prise de photographie et une quatrième partie destinée à être placée sur une partie supérieure de la section (40, 61) contenant la pellicule.

11. Ensemble à pellicule photographique muni d'un objectif selon les revendications 9 et 10, dans lequel une première griffe (47) d'accouplement est formée à la partie supérieure de la première partie, une seconde griffe (48) d'accouplement est formée à l'avant de la seconde partie, un premier trou (52) d'accouplement est formé à l'arrière de la quatrième partie afin qu'il soit couplé à la première griffe (47) d'accouplement, et un second trou (53) d'accouplement est formé à la partie inférieure de la troisième partie afin qu'il soit couplé à la seconde griffe (48) d'accouplement.

12. Ensemble à pellicule photographique muni d'un objectif selon l'une quelconque des revendications 1 à 11, comprenant en outre :
une carte (81) de circuit d'un dispositif à éclairs (43) destiné à provoquer l'émission de lumière par une section (10) d'émission de lumière au moment de la prise d'une photographie,
une paire de contacts (97, 98) placés sur une surface de la carte (81) du circuit à éclairs,
une paire de plaques métalliques allongées (102, 103) de contact placées côte à côte, supportées par la section (60) du dispositif de prise de photographie, une première paire d'extrémités des plaques respectives (102, 103) de contact étant utilisée comme contact X pour permettre une commutation par tout ou rien suivant le fonctionnement du mécanisme obturateur (12), une paire d'extrémités opposées des plaques respectives (102, 103) de contact étant utilisées comme bornes, et
un dispositif de maintien de la carte (81) du circuit à éclairs à un état dans lequel les contacts (97, 98) du circuit (81) à éclairs sont au contact des bornes des plaques (102, 103) de contact lorsque la carte (81) du circuit à éclairs est introduite de façon amovible sur la section (60) du dispositif de prise de photographiques.

13. Ensemble à pellicule photographique muni d'un objectif selon la revendication 12, dans lequel la section (10) d'émission de lumière est montée sur la carte (81) du circuit à éclairs.

14. Ensemble à pellicule photographique muni d'un objectif selon la revendication 12 ou 13, dans lequel l'une des plaques (103) de contact est repoussée par une partie d'une lame (79) d'obturateur du mécanisme obturateur (12) afin qu'elle soit au contact de l'autre plaque (102) de contact lorsque la lame (79) d'obturateur prend une position d'ouverture.

15. Ensemble à pellicule photographique muni d'un objectif selon l'une des revendications 12 à 14, dans lequel les plaques (102, 103) de contact sont fixées à une carte (77) de support de l'objectif (5) de prise de vues.

16. Ensemble à pellicule photographique muni d'un objectif selon l'une des revendications 12 à 15, dans lequel les contacts de la carte (81) du circuit à éclairs sont des portées (97, 98), et les bornes des plaques (102, 103) de contact sont repliées à la configuration de la lettre L et inclinées afin qu'elles soient au contact des parties (97, 98) de manière élastique.

17. Ensemble à pellicule photographique muni d'un objectif selon l'une des revendications 12 à 16, dans lequel le dispositif de maintien comporte une plaque (90) de support de la carte (81) du circuit à éclairs par l'arrière, et un organe (91) de support de la carte (81) du circuit à éclairs porté par la plaque (90) de support par l'avant.

18. Ensemble à pellicule photographique muni d'un objectif selon la revendication 17, dans lequel la plaque de support (90) et l'organe de support (91) sont formés à l'extérieur du tube (78) de protection contre la lumière qui est placé entre l'objectif (5) de prise de vues et l'ouverture d'exposition.

19. Ensemble à pellicule photographique muni d'un objectif selon l'une quelconque des revendications 12 à 18, dans lequel 1 le couvercle avant (41) possède en outre un dispositif (110) destiné à repousser les plaques de contact (102, 103) contre la carte (81) du circuit à éclairs.

20. Ensemble à pellicule photographique muni d'un objectif selon la revendication 19, dans lequel le dispositif destiné à repousser comporte au moins une partie en saillie (110) formée à la face arrière du couvercle avant (41) afin qu'elle dépasse vers la carte (81) du circuit à éclairs, deux gorges (112) formées sur la partie en saillie (110) et destinées à loger les plaques de contact (102, 103) afin que les plaques de contact (102, 103) soient au contact de la carte (81) du circuit à éclairs, et des surfaces inclinées (111) formées sur la partie en saillie et destinées à guider les plaques de contact (102, 103) afin qu'elles pénètrent dans les gorges (112).
